# EUROPEAN PATENT SPECIFICATION

(11) **EP 3 981 361 B1**
(45) Date of publication and mention of the grant of the patent: **28.02.2024**
(21) Application number: 21212268.3
(22) Date of filing: 12.09.2017
(51) Int. Cl.: A61C 13/00

(54) **BLANK AND METHOD FOR THE MANUFACTURE OF AT LEAST ONE MOLDED PART**
ROHLING UND VERFAHREN ZUR HERSTELLUNG MINDESTENS EINES FORMTEILS
ÉBAUCHE ET PROCÉDÉ POUR LA FABRICATION D'AU MOINS UNE PIÈCE MOULÉE

(43) Date of publication of application: 13.04.2022
(62) Divisional of application: 17768421.4
(73) Proprietor: DENTSPLY SIRONA Inc., York, PA 17401 (US); DeguDent GmbH, 63457 Hanau (DE)
(72) Inventor: Völkl, Lothar, 63773 Goldbach (DE); Fecher, Stefan, 63867 Johannesberg (DE); Gebhardt, Andreas, 63505 Langenselbold (DE)
(74) Representative: Pichova, Vanda

(56) References cited:
- EP-A1- 0 807 422
- EP-A2- 2 016 922
- WO-A1-2013/167903
- DE-A1-102011 055 393

## Description

### FIELD OF THE INVENTION

The invention relates to a blank for the manufacture of at least one molded body, m particular a dental reconstruction.

The invention also embraces a method for the production of at least one molded part, in particular a dental restoration, or a section thereof through material-removing processing.

### BACKGROUND OF THE INVENTION

Blanks, made of ceramic materials have been successfully applied for manufacturing molded bodies, in particular dental restorations through material-removing machining using multi-axis machine tools such as milling machines. Blanks consisting of other materials, such as plastics, composites or metals, are also used for that purpose.

To produce high-precision molded parts by CAD/CAM methods it is necessary to take the wear of the machining tool into consideration. In the prior art blanks are machined in such a way that the tool is fed in an axial direction. This results in a high load on the tool and thus to wear, which means that it is necessary to change the tool frequently.

EP 2 016 922 A2 of Ivoclar Vivadent AG discloses a cluster mill blank including a framework constructed to cooperate with a blank holder of an existing CAD/CAM system, and a plurality of sub-blanks attached to the framework forming an addressable matrix or cluster blank. CAD/CAM systems including such a framework, as well as associated methods are described.

EP 0 807 422 A1 of Marco Brandestini et al. discloses a blank for preparing an artificial tooth part with a body for being shaped by material removal and holder means for mounting the blank in a spatial relation in a shaping apparatus, wherein the body comprises a first section and a second section wherein the first section has a higher breaking strength than the second section, wherein the first section has the shape of a substantially flat plate.

DE 10 2011 055393 A1 of Rueth Ralph et al. discloses a method for producing a plastic artificial resin blank having a plurality of different color layers, which is introduced in a mold under pressure, wherein the blank consists of a thermoplastic material and in a multi-component injection molding process into a first cavity in a first plastic layer with a first pigmentation is introduced into an injection mold and at least one further plastic layer of the same plastic with a lighter pigmentation with respect to the first plastic layer is introduced into at least one second cavity in the injection mold, wherein the first plastic layer on the side on which the second plastic layer is applied, at least partially formed with a profile and / or a structure and on the other side has a homogeneous surface.

### SUMMARY OF THE INVENTION

An object of the present invention is to provide a blank that allows the wear on the tool to be reduced when the blank is machined. A further object is to enable optimal usage of the material considering the shape of the desired molded part.

Moreover, a method for the production of a molded body is presented which is characterized by a reduction in the wear of the tool.

To achieve the aim a blank according to claim 1 is proposed.

In contrast to the prior art, the blank does not have a disc geometry or cuboid geometry with uniform thickness that does not vary, but rather comprises a carrier layer that forms the base and regions that emanate and project therefrom, to yield the advantage that the material requirement for the blank is reduced so that molded parts can be produced at lower cost, in particular dental reconstructions such as bridges, frameworks, crowns, caps, veneers, inlays or onlays.

The present invention is defined in the claims.

In addition to material savings there is further the advantage that right from the start of the machining operation regions can be machined from their sides, i.e., relative movement in a transverse direction between the tool's axis of rotation and the projecting region, in particular perpendicular to the axis of rotation, is possible. This results in a lower load on the tool so that wear is reduced.

The at least one region projecting above the base has preferably one of the following geometries - cuboid, cylindrical, conical or curved shape. The different geometries enable an optimal adaptation to the shape or geometries of the molded bodies to be produced. Thus, for the production of dental reconstructions regions can project from the base that are different in terms of area to such an extent that from a single blank, molded bodies of different geometries can be derived through material-removing working, with optimal material usage.

In particular it is provided for the base to have a thickness **B** where **B** :S 10 mm, preferably **B** :S 5 mm, in particular 1.5 mm :SB :S 4 mm.

In a further development of the invention the ratio of the thickness **B** of the base to the height H of the region projecting above the base is 1:15 :S B:H :S 1:1, in particular 1:10 :S B:H :S 1:6.

In terms of area the reg10ns have dimensions that enable the production of a dental framework, a crown, a partial crown, a bridge, a dental arch, a cap, a veneer, an abutment, a pin construction, an inlay and/or an onlay.

In a preferred embodiment the blank or at least a region of it comprises or contains at least one material from the group of ceramic materials such as zirconium dioxide, glass ceramic, feldspar ceramic, metallic materials such as titanium, CoCr alloy, organic materials such as thermoplastic material, in particular PMMA or PEEK, composite materials, glass fiber-reinforced plastic.

The blank is preferably made from zirconium dioxide to which yttrium oxide (Y203), calcium oxide (CaO), magnesium oxide (MgO) and/or cerium oxide (Ce02), in particular yttrium oxide, has been added.

Further, there is the possibility of producing dental prostheses in particular which in terms of color gradation, or in terms of their material properties, correspond to a natural tooth. The invention is therefore characterized in that the at least one region projecting above the base, optionally incorporating the materials of the base, comprises sections that differ in terms of their material properties, such as strength and/or translucency and/or coloration and/or fluorescence.

There is no departure from the invention if the base is made from a material that is different from that of the regions from which the molded bodies are derived. So, for example, the base material may be a plastic. The base can have openings in which the regions, for instance, are glued in. However, there is also the possibility that the regions are surrounded by the base material during manufacturing of the base by e.g. injection molding. Corresponding to the thickness of the base the regions are lamellar enclosed by the base material.

The invention relates also to a method for the production of at least one molded body, in particular a dental restoration, or a section thereof through machining by material-removing from a region of a blank that projects from a base, wherein the machining commences through removal of material from the circumferential surface of the region.

It is thereby in particular provided for the machining to be carried out using a milling tool that has an axis of rotation and that at least at the beginning of material removal there is a relative movement between the milling tool and the region transverse, preferably perpendicular, to the axis of rotation.

The blank itself can be produced through pressing, casting, additive methods, forming or mechanical working methods.

Particularly, use is made of a blank with a base from which a number of regions emanate, wherein the regions are separated by a section of the base.

Further details, advantages and features of the invention may be derived not only from the claims, and the features to be taken from them - either alone and/or in combination - but also from the examples described below and illustrated by drawings.

### BRIEF DESCRIPTION OF THE DRAWINGS

Figures:
- Fig. 1: A top view of a first embodiment of a blank,
- Fig. 2: A section along the line D-D in Fig. 1,
- Fig. 3: The blank according to Fig. 1 viewed from the bottom,
- Fig. 4: A top view of a second embodiment of a blank,
- Fig. 5: A section along the line A-A in Fig. 4, and
- Fig. 6: The blank according to Fig. 4 viewed from the bottom.

### DETAILED DESCRIPTION OF THE INVENTION

The teaching according to the invention is described in more detail with reference to the figures, on the basis of which molded bodies, in particular dental molded parts, can be produced in a material-saving manner from blanks, in particular through milling. At the same time this yields the advantage that the wear on the tool used for machining of the blank can be reduced.

The blanks can preferably comprise ceramic materials such as zirconium dioxide, glass ceramic, feldspar ceramic, to name just a few ceramic materials.

The blanks may in particular be of zirconium dioxide to which yttrium oxide, calcium oxide, magnesium oxide and/or cerium oxide is added, but in particular yttrium oxide stabilized zirconia.

Suitable materials also include metallic materials such as titanium or CoCr alloys.

The blanks may also be made from orgamc materials, optionally filled, in particular thermoplastic materials such as polymethylmethacrylate **(PMMA)** or polyetheretherketone (PEEK).

Composite materials or glass fiber-reinforced plastic are also possible.

Disc-shaped blanks are generally used to manufacture dental molded bodies / reconstructions through material-removing working. The dental restorations can be in the form of dental frameworks, crowns, partial crowns, bridges, caps, veneers, abutments, pin constructions, inlays and/or onlays or dental arches, but this is by no means an exhaustive list. A plurality of corresponding molded bodies may be obtained, depending on the diameter of the blanks.

Previously known blanks exhibit a uniform thickness across the regions from which the molded bodies are obtained through machining. A disadvantage here is that there are relatively high material losses since the material between the individual molded bodies is not utilized. A further particular disadvantage here is that the milling tool rotating about an axis of rotation and moving in the direction of the axis of rotation at least at the start of the processing of a molded part removes material from the blank with only a small part of the tool surface so that there is a high load on the tool. The wear is consequently relatively high.

All of these disadvantages are avoided with the blanks according to the invention.

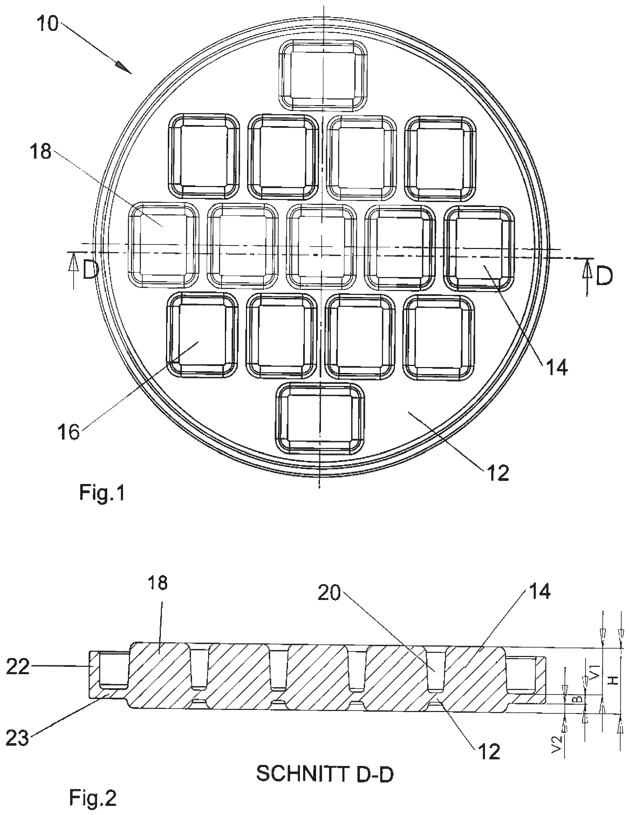

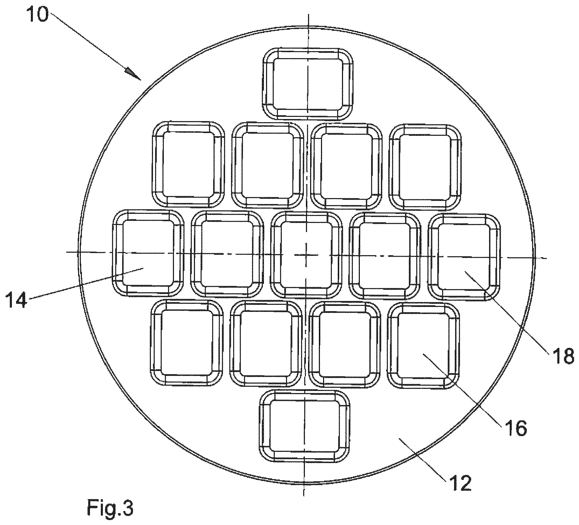

Figures 1 to 3 thus show a first embodiment of a disc-shaped blank 10 that in the diagrams has a circular geometry, which has regions of different thickness.

Thus the blank 10 in principle comprises a base 12 and regions that emanate therefrom, indicated by way of example by the reference numbers 14, 16 and 18. In the exemplary embodiment the regions 14, 16, 18 do not just project above one side of the base 12, but rather extend on both sides, as clearly shown in the sectional view in Fig. 2. This, however, is not a required characteristic. Rather, the invention relates also to a blank wherein regions project only from one side of the base.

The height of the regions 14, 16, 18 is aligned with the molded bodies to be produced.

To obtain desired molded bodies from the regions 14, 16, 18, it is possible due to the space between the regions 14, 16, 18 that a machining tool acts from the side on the elevated regions 14, 16, 18, i.e., a relative movement to the elevation 14, 16, 18 substantially perpendicular to the axis of rotation of the tool is achieved. This possibility relates not just to the regions 14, 16, 18, that are arranged in the perimeter of the blank 10, but also to the regions surrounded by a plurality of projecting regions, as there is a distance between these, as can be seen in the sectional view of Figure 2. A corresponding distance is indicated by way of example by the reference number 20.

In particular the invention provides for the elevated regions 14, 16, 18 emanating from the base to extend non-symmetrically on both sides of the base, so that without change to holders, that normally accommodate blanks with the usual milling machines, blanks according to the invention can be fixed in a processing machine. For this purpose a circumferential border 22 is provided in the exemplary embodiment which limits the blank 10 peripherally. In this example the edge 22 has an L-shaped cross-section and may be an integral part of the blank 10. The edge 22 can of course also be a separately-produced element that is connected to the blank, i.e., in particular with the base 12, for instance through gluing.

As can be seen from the sectional view in Figure 2, the base 12 has a thickness B that is preferred in the range I to IO mm, in particular between I mm and 5 mm, and especially preferred in the range 1.5 mm to 3 mm. The region 14, 16, 18 projecting above the upper side of the base 12 has a height VI and the region projecting from the underside of the base 12 has a height V2. VI + V2 + B should preferably lie between 15 mm and 25 mm. In particular the ratio of the thickness B of the base 12 to the total height H (= VI + V2 + B) of the particular region 14, 16, 18 should be 1:15 to 1:1, in particular 1:10 :S B:H :SI:6.

From the bottom view of the blank 10 it is similarly clear that the regions 14, 16, 18 project above the base 12.

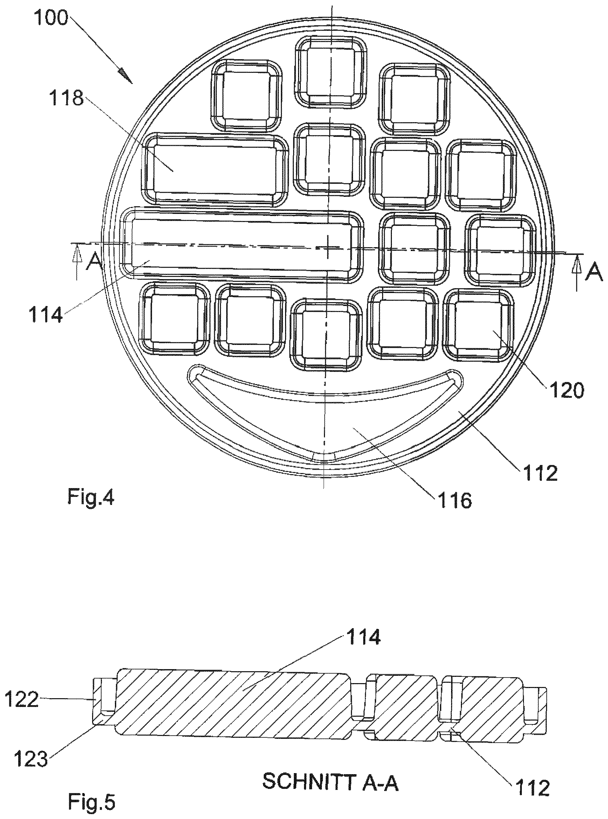

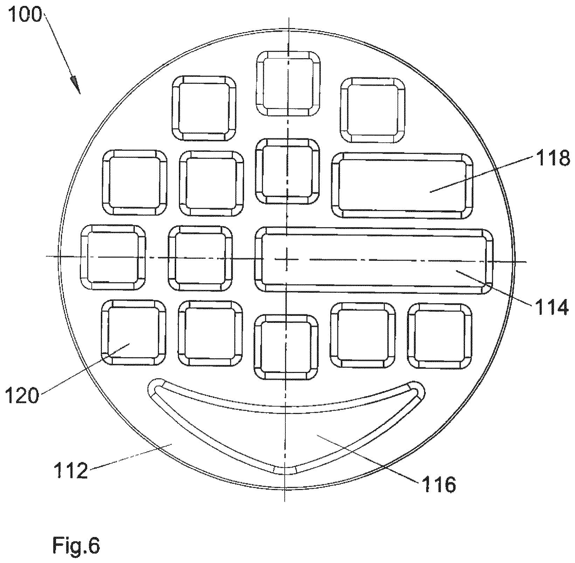

The exemplary embodiment shown in Figures 4 to 6 differs from that in Figures I to 3 in that the blank 100, which also has a circular geometry, has regions that extend differently in terms of area. By way of example, four regions 114, 116, 118 and 120 are indicated. The regions 114, 116, 118, 120 extend - as with the embodiment illustrated by Figures I to 3 - on both sides of a base 112, as can be seen in the sectional view A-A (Fig. 5). The blank 100 and thus the base 112 are also delimited by a circumferential edge 122. The description for Figures I to 3 applies here too.

Since regions of different area extend from the base 112, it follows that molded bodies of different geometries and sizes can be obtained. For example, a four to five unit bridge can be machined from the region 114, a front dental arch from the region 116, a three unit bridge from the region 118 and from the other equally dimensioned regions 120 single tooth restorations such as inlays, onlays, crowns etc. can be machined.

The same advantages, as described above, are also seen for the blank 100, in particular the material savings and the lower wear of the rotating tool, since the projecting regions 114, 116, 118, 120 can be approached from the side, i.e., transversely or perpendicularly to the axis of rotation.

The teaching according to the invention enables material to be spared. This saving may be up to 40% if, for example, the base 12, 112 has a thickness of 2 mm and the total thickness of the blank, in the regions from which the projections 14, 16, 18, 114, 116, 118, 120 emanate from the base 12, 112, is 18 mm.

As mentioned already, the blanks 10, 100 according to the invention, as well as blanks of uniform thickness, can be held in the usual holders since it is not necessary to change the profile and the dimensions of the edge 22, 122. Thereby, the limb 23, 123 of the edge 22, 122, which extends parallel to the plane defined by the blank 10, 100 and which in the sectional views extends horizontally, is an extension of the base 12, 112, as can be seen in the sectional views.

The blanks 10, 100 can be produced, for example, through additive methods by pressing, casting, forming or mechanical manufacturing methods.

It is also possible for the material of the blank at least in the region of the elevations 14, 16, 18, 114, 116, 118, 120 in particular over its height to have a different composition / different material characteristics to, for instance, obtain a color gradation that corresponds to that of natural teeth for the crowns or bridges, produced.

It is also possible to make regions comprising different material layers so that a dentine core is formed. Different translucency, strength and/or fluorescence can be generated over the height of the particular region 14, 16, 18, 114, 116, 118, 120 depending on the materials.

## Claims

1. A blank (10, 100, 200) for the production of a molded body, in particular a dental reconstruction,
wherein
the blank has abase (12, 112) and at least one region (14, 16, 18, 114, 116, 118,120) that emanates therefrom and projects above the base, from which at least a part of the molded body can be derived by working, wherein
the base (12, 112) has a disc geometry over which a plurality of regions (14, 16, 18, 114, 116, 118, 120) project, **characterized in that** at least one region (14, 16, 18, 114, 116, 118, 120) projects above both sides of the base (12, 112).

2. The blank according to claim 1, **characterized in that** the base (12, 112) is limited by one preferably circumferential edge (22, 122) projecting above the base, which is manufactured integrally with the base or is an element connected to the base such as an adapter.

3. The blank according to at least one of the preceding claims, **characterized in that** the plurality of regions (14, 16, 18, 114, 116, 118, 120) has a geometry from the group cuboid, cylindrical, conical or scythe shape.

4. The blank according to at least one of the preceding claims, **characterized in that** the base (12, 112) has a thickness B where B≤ 10 mm, in particular B≤ 5 mm, preferably 1.5 mm≤ B≤ 4 mm.

5. The blank according to at least one of the preceding claims, **characterized in that** the ratio of thickness B of the base (12, 112) to the height H of the plurality of regions projecting above the base is 1:15 ≤B:H ≤ 1:1, in particular 1:10 ≤B:H≤ 1:6.

6. The blank according to at least one of the preceding claims, **characterized in that** the plurality of regions (14, 16, 18, 114, 116, 118, 120) having different geometries.

7. The blank according to at least one of the preceding claims, **characterized in that** the plurality of regions (14, 16, 18, 114, 116, 118, 120) have dimensions for the manufacture of a dental framework, a crown, a partial crown, a bridge, a dental arch, a cap, a veneer, an abutment, a pin construction, an inlay and/or an onlay.

8. The blank according to at least one of the preceding claims, **characterized in that** the blank (10, 100) and/or the plurality of regions (14, 16, 18, 114, 116, 118, 120) comprises or contains a material from the group ceramic material such as zirconium dioxide, glass ceramic, feldspar ceramic, metallic material such as titanium, CoCr alloy, an organic material such as a thermoplastic material, in particular PMMA or PEEK, a composite material or a glass fiber-reinforced plastic.

9. The blank according to at least one of the preceding claims, **characterized in that** the plurality of regions (14, 16, 18, 114, 116, 118, 120) projecting above the base (12, 112), including the material of the base, if appropriate, comprises sections of different material compositions, in particular ceramic materials of different compositions.

10. The blank according to at least one of the preceding claims, **characterized in that** the plurality of regions (14, 16, 18, 114, 116, 118, 120) projecting above the base (12, 112), including the material of the base, if appropriate, comprises sections of different material characteristics such as strength and/or translucency and/or color and/or fluorescence.

11. A method for the manufacture of at least one molded body, in particular a dental restoration, or part thereof, through machining by material-removing of a region (14, 16, 18, 114, 116, 118, 120) projecting above a base of the blank (10, 100, 200) according to any of claims 1 to 10, wherein the machining commences through removal of material from the circumferential surface of the region.

12. The method according to claim 11, **characterized in that** the machining is carried out using a milling or grinding tool that has an axis of rotation and that at least at the start of the material removal there is a relative movement between the milling or grinding tool and the region (14, 16, 18, 114, 116, 118, 120) transversely to, in particular perpendicularly to, the axis of rotation.

13. The method according to claims 11 or 12, **characterized in that** the blank (10, 100) used is manufactured through pressing, casting, additive processes, forming or mechanical manufacturing methods.

14. The method according to at least one of claims 11 to 13 , **characterized in that** the blank (10, 100) is one from the base (12, 112) of which a plurality of regions (14, 16, 18, 114, 116, 118, 120) emanate at a distance from one another through a section (20) of the base.

## Patentansprüche

1. Rohling (10, 100, 200) für die Herstellung eines geformten Körpers, insbesondere einer Dentalrekonstruktion,
wobei
der Rohling einen Boden (12, 112) aufweist und mindestens eine Region (14, 16, 18, 114, 116, 118, 120), die von demselben ausgeht und über den Boden hinausragt, von der mindestens ein Teil des geformten Körpers durch Bearbeiten abgeleitet werden kann, wobei
der Boden (12, 112) eine Scheibengeometrie aufweist, über die eine Vielzahl von Regionen (14, 16, 18, 114, 116, 118, 120) hinausragen, **gekennzeichnet dadurch, dass** mindestens eine Region (14, 16, 18, 114, 116, 118, 120) über beide Seiten des Bodens (12, 112) hinausragt.

2. Rohling nach Anspruch 1, **gekennzeichnet dadurch, dass** der Boden (12, 112) durch eine vorzugsweise umlaufende Kante (22, 122) begrenzt ist, die über den Boden hinausragt, welche einstückig mit dem Boden gefertigt ist oder welche ein mit dem Boden verbundenes Element, wie ein Adapter, ist.

3. Rohling nach mindestens einem der vorstehenden Ansprüche, **gekennzeichnet dadurch, dass** die Vielzahl von Regionen (14, 16, 18, 114, 116, 118, 120) eine Geometrie aus der Gruppe der würfelförmigen, zylindrischen, konischen oder sichelförmigen Form aufweist.

4. Rohling nach mindestens einem der vorstehenden Ansprüche, **gekennzeichnet dadurch, dass** der Boden (12, 112) eine Dicke B aufweist, wobei B≤ 10 mm, insbesondere B≤ 5 mm, bevorzugt 1,5 mm≤ B≤ 4 mm ist.

5. Rohling nach mindestens einem der vorstehenden Ansprüche, **gekennzeichnet dadurch, dass** das Verhältnis der Dicke B des Bodens (12, 112) zur Höhe H der Vielzahl von Regionen, die über den Boden hinausragen, 1:15 ≤B:H ≤ 1:1, insbesondere 1:10 ≤B:H≤ 1:6 beträgt.

6. Rohling nach mindestens einem der vorstehenden Ansprüche, **gekennzeichnet dadurch, dass** die Vielzahl von Regionen (14, 16, 18, 114, 116, 118, 120) unterschiedliche Geometrien aufweist.

7. Rohling nach mindestens einem der vorstehenden Ansprüche, **gekennzeichnet dadurch, dass** die Vielzahl von Regionen (14, 16, 18, 114, 116, 118, 120) Abmessungen für die Herstellung eines Dentalgerüsts, einer Krone, einer Teilkrone, einer Brücke, einer Kappe, einer Verblendhaftschale, eines Abutments, einer Stiftkonstruktion, eines Inlays und/oder eines Onlays aufweist.

8. Rohling nach mindestens einem der vorstehenden Ansprüche, **gekennzeichnet dadurch dass** der Rohling (10, 100) und/oder die Vielzahl von Regionen (14, 16, 18, 114, 116, 118, 120) ein Material aus der Gruppe eines Keramikmaterials, wie Zirconiumdioxid, Glaskeramik, Feldspatkeramik, eines Metallmaterials, wie Titan, CoCr-Legierung, eines organischen Materials, wie ein thermoplastisches Material, insbesondere PMMA oder PEEK, eines Verbundmaterials oder eines glasfaserverstärkten Kunststoffs umfasst oder beinhaltet.

9. Rohling nach mindestens einem der vorstehenden Ansprüche, **gekennzeichnet dadurch, dass** die Vielzahl von Regionen (14, 16, 18, 114, 116, 118, 120), die über den Boden (12, 112) hinausragen, einschließlich gegebenenfalls des Materials des Bodens, Abschnitte verschiedener Materialzusammensetzungen, insbesondere Keramikmaterialien verschiedener Zusammensetzungen, umfasst.

10. Rohling nach mindestens einem der vorstehenden Ansprüche, **gekennzeichnet dadurch, dass** die Vielzahl von Regionen (14, 16, 18, 114, 116, 118, 120), die über den Boden (12, 112) hinausragen, einschließlich gegebenenfalls des Materials des Bodens, Abschnitte verschiedener Materialeigenschaften, wie Festigkeit und/oder Lichtdurchlässigkeit und/oder Farbe und/oder Fluoreszenz umfasst.

11. Verfahren zur Herstellung von mindestens einem geformten Körper, insbesondere einer Dentalrestauration oder eines Teils derselben, durch Bearbeiten mittels Entfernen von Material einer Region (14, 16, 18, 114, 116, 118, 120), die über einen Boden des Rohlings (10, 100, 200) hinausragt, nach einem der Ansprüche 1 bis 10, wobei das Bearbeiten durch Entfernen von Material von der umlaufenden Fläche der Region beginnt.

12. Verfahren nach Anspruch 11, **gekennzeichnet dadurch, dass** das Bearbeiten mittels eines Fräs- oder Schleifwerkzeugs, das eine Drehachse aufweist, durchgeführt wird, und dass zumindest zu Beginn des Entfernens von Material eine relative Bewegung zwischen dem Fräs- oder Schleifwerkzeug und der Region (14, 16, 18, 114, 116, 118, 120) quer, insbesondere senkrecht, zur Drehachse vorhanden ist.

13. Verfahren nach den Ansprüchen 11 oder 12, **gekennzeichnet dadurch, dass** der verwendete Rohling (10, 100) durch Pressen, Gießen, additive Prozesse, Formen oder mechanische Herstellungsverfahren hergestellt wird.

14. Verfahren nach mindestens einem der Ansprüche 11 bis 13, **gekennzeichnet dadurch, dass** der Rohling (10, 100) einer ist, aus dessen Boden (12, 112) eine Vielzahl von Regionen (14, 16, 18, 114, 116, 118, 120) in einem Abstand zueinander durch einen Abschnitt (20) des Bodens ausgehen.

## Revendications

1. Ébauche (10, 100, 200) pour la production d'un corps moulé, en particulier d'une reconstruction dentaire,
dans laquelle
l'ébauche présente une base (12, 112) et au moins une région (14, 16, 18, 114, 116, 118, 120) qui en émane et fait saillie au-dessus de la base, à partir de laquelle au moins une partie du corps moulé peut être obtenue en travaillant, dans laquelle
la base (12, 112) présente une géométrie de disque sur laquelle une pluralité de régions (14, 16, 18, 114, 116, 118, 120) font saillie, **caractérisée en ce qu'**au moins une région (14, 16, 18, 114, 116, 118, 120) fait saillie au-dessus des deux côtés de la base (12, 112).

2. Ébauche selon la revendication 1, **caractérisée en ce que** la base (12, 112) est limitée par un bord de préférence circonférentiel (22, 122) faisant saillie au-dessus de la base, qui est fabriqué d'un seul tenant avec la base ou est un élément relié à la base tel qu'un adaptateur.

3. Ébauche selon au moins l'une des revendications précédentes, **caractérisée en ce que** la pluralité de régions (14, 16, 18, 114, 116, 118, 120) présente une géométrie du groupe des formes cuboïde, cylindrique, conique ou demi-lune.

4. Ébauche selon au moins l'une des revendications précédentes, **caractérisée en ce que** la base (12, 112) présente une épaisseur B où B ≤ 10 mm, en particulier B ≤ 5 mm, de préférence 1,5 mm ≤ B ≤ 4 mm.

5. Ébauche selon au moins l'une des revendications précédentes, **caractérisée en ce que** le rapport entre l'épaisseur B de la base (12, 112) et la hauteur H de la pluralité de régions faisant saillie au-dessus de la base est de 1:15 ≤ B:H ≤ 1:1, en particulier 1:10 ≤ B:H ≤ 1:6.

6. Ébauche selon au moins l'une des revendications précédentes, **caractérisée en ce que** la pluralité de régions (14, 16, 18, 114, 116, 118, 120) présente des géométries différentes.

7. Ébauche selon au moins l'une des revendications précédentes, **caractérisée en ce que** la pluralité de régions (14, 16, 18, 114, 116, 118, 120) présentent des dimensions pour la fabrication d'une infrastructure dentaire, d'une couronne, d'une couronne partielle, d'un pont, d'une arcade dentaire, d'une coiffe, d'une facette, d'un pilier, d'une construction à broches, d'un inlay et/ou d'un onlay.

8. Ébauche selon au moins l'une des revendications précédentes, **caractérisée en ce que** l'ébauche (10, 100) et/ou la pluralité de régions (14, 16, 18, 114, 116, 118, 120) comprend ou contient un matériau provenant du groupe matériau céramique tel que dioxyde de zirconium, vitrocéramique, céramique feldspathique, matériau métallique tel que titane, alliage CoCr, matériau organique tel que matériau thermoplastique, en particulier PMMA ou PEEK, matériau composite ou plastique renforcé par des fibres de verre.

9. Ébauche selon au moins l'une des revendications précédentes, **caractérisée en ce que** la pluralité de régions (14, 16, 18, 114, 116, 118, 120) faisant saillie au-dessus de la base (12, 112), incluant le matériau de la base, le cas échéant, comprend des sections ayant des compositions de matériaux différentes, en particulier des matériaux céramiques de compositions différentes.

10. Ébauche selon au moins l'une des revendications précédentes, **caractérisée en ce que** la pluralité de régions (14, 16, 18, 114, 116, 118, 120) faisant saillie au-dessus de la base (12, 112), incluant le matériau de la base, le cas échéant, comprend des sections ayant des caractéristiques de matériaux différentes telles que la résistance et/ou la translucidité et/ou la couleur et/ou la fluorescence.

11. Procédé de fabrication d'au moins un corps moulé, en particulier d'une restauration dentaire, ou d'une partie de celle-ci, par usinage par enlèvement de matière d'une région (14, 16, 18, 114, 116, 118, 120) faisant saillie au-dessus d'une base de l'ébauche (10, 100, 200) selon l'une quelconque des revendications 1 à 10, dans lequel l'usinage commence par l'enlèvement de matière de la surface circonférentielle de la région.

12. Procédé selon la revendication 11, **caractérisé en ce que** l'usinage est réalisé à l'aide d'un outil de fraisage ou de meulage qui présente un axe de rotation et qu'au moins au début de l'enlèvement de matière il existe un mouvement relatif entre l'outil de fraisage ou de meulage et la région (14, 16, 18, 114, 116, 118, 120) transversalement, en particulier perpendiculairement, à l'axe de rotation.

13. Procédé selon les revendications 11 ou 12, **caractérisé en ce que** l'ébauche (10, 100) utilisée est fabriquée par pressage, moulage, processus additifs, procédés de formage ou de fabrication mécanique.

14. Procédé selon au moins l'une des revendications 11 à 13, **caractérisé en ce que** l'ébauche (10, 100) est l'une depuis la base (12, 112) de laquelle une pluralité de régions (14, 16, 18, 114, 116, 118, 120) émanent à une distance les unes des autres à travers une section (20) de la base.
